# FASCICULE DE BREVET EUROPEEN

(11) **EP 3 494 047 B1**
(45) Date de publication et mention de la délivrance du brevet: **24.06.2020**
(21) Numéro de dépôt: 17764871.4
(22) Date de dépôt: 01.08.2017
(51) Int. Cl.: B64D 41/00, B64D 13/00, H02P 25/22, H02K 3/28, H02J 4/00, H02K 19/34

(54) **ARCHITECTURE DE RÉSEAU D'ALIMENTATION ÉLECTRIQUE**
ENERGIEVERSORGUNGSNETZARCHITEKTUR
POWER SUPPLY NETWORK ARCHITECTURE

(30) Priorité: 03.08.2016 FR 1657519
(43) Date de publication de la demande: 12.06.2019
(73) Titulaire: Liebherr-Aerospace Toulouse SAS, 31200 Toulouse (FR)
(72) Inventeur: ABDELLI, Youcef, 31140 Saint Alban (FR); BRODEAU, Pierre, 31400 Toulouse (FR); DEVANNEAUX, Vincent, 31300 Toulouse (FR)
(74) Mandataire: Gevers & Orès
(86) Numéro de dépôt international: PCT/FR2017/052163
(87) Numéro de publication internationale: WO 2018/024983

(56) Documents cités:
- WO-A2-2010/067021
- US-A1- 2010 270 858

## Description

### 1. Domaine technique de l'invention

L'invention concerne une architecture de réseau d'alimentation électrique dans un aéronef. En particulier, l'invention concerne une architecture de réseau d'alimentation électrique de moteurs de compresseurs de système de conditionnement d'air d'un aéronef par des générateurs électriques de l'aéronef. L'invention concerne en outre un aéronef comportant une telle architecture.

### 2. Arrière-plan technologique

Les systèmes de conditionnement d'air utilisés dans les aéronefs, généralement des systèmes pneumatiques par prélèvement d'air, évoluent de plus en plus vers des systèmes électriques sans prélèvement d'air dans les moteurs propulsifs (dits *bleedless* en anglais). Cette évolution s'accompagne d'une progression de la consommation électrique des équipements à bord de l'aéronef.

La production d'électricité dans l'aéronef est assurée par un ou plusieurs générateurs électriques, prélevant de l'énergie mécanique des moteurs de propulsion pour générer de l'énergie électrique. Dans les systèmes actuels, les moteurs de propulsion peuvent chacun être équipés d'un ou deux générateurs électriques.

Un système de conditionnement d'air électrique d'un aéronef comprend un ou plusieurs groupes de conditionnement d'air (aussi appelé pack de conditionnement d'air) comprenant une ou plusieurs machines, de préférence de type turbomachines. Ces turbomachines comprennent un ou plusieurs compresseurs disposés sur un arbre de la turbomachine et un moteur de compresseur entrainant ledit arbre. L'alimentation des moteurs de compresseurs de ces groupes de conditionnement d'air représentent une part importante de la consommation électrique de ces générateurs électriques. Par conséquent, les générateurs électriques sont dimensionnés en grande partie en fonction de cette consommation électrique. Ainsi, il est important de maîtriser cette consommation. Un tel système est décrit dans le document US2010/0270858.

Certains aéronefs disposent d'un ou plusieurs groupes de conditionnement dont les compresseurs sont activés à des conditions de température et de pression différentes, en particulier à des altitudes différentes. Chaque moteur de compresseur de turbomachine est alimenté par un des générateurs électriques de l'aéronef. Ainsi, pendant une première phase de vol, de l'altitude au niveau du sol (au décollage ou à l'atterrissage) jusqu'à une altitude dite de transition (par exemple 7.62 km (25 000 pieds) pour les avions d'affaires, ou 4.57 km (15 000 pieds) pour les avions monocouloirs), un premier moteur de compresseur est alimenté par un premier générateur électrique relié à un des moteurs de propulsion. Pendant une seconde phase de vol, au-dessus de l'altitude de transition, le premier moteur de compresseur est alimenté par le premier générateur électrique et un deuxième moteur de compresseur est alimenté par un deuxième générateur électrique relié à un des moteurs de propulsion.

Ainsi, chaque générateur électrique fournit l'intégralité de la consommation électrique d'un des moteurs de compresseur. Ils doivent donc être dimensionnés à cet effet (en plus des consommations électriques annexes par d'autres équipements). En outre, lorsque le premier générateur électrique alimente le premier moteur de compresseur en dessous de l'altitude de transition, le deuxième générateur n'alimente pas de moteur de compresseur et est donc en sous-charge ce qui entraîne un déséquilibre de l'alimentation et de la charge des générateurs.

Dans le cas où l'aéronef comprendrait un unique moteur de compresseur, le problème de l'équilibrage de la consommation électrique se présente aussi car un seul générateur électrique doit être dimensionné pour alimenter le moteur de compresseur.

Enfin, en cas de panne d'alimentation, le moteur de compresseur peut ne plus être directement alimenté.

Les inventeurs ont donc cherché une solution pour équilibrer la charge électrique des générateurs électriques de l'aéronef au vu de la consommation d'un ou plusieurs moteur de compresseur de turbomachine de groupes de conditionnement d'air.

### 3. Objectifs de l'invention

L'invention vise à pallier au moins certains des inconvénients des architectures de réseau d'alimentation électrique de système de conditionnement d'air connus.

En particulier, l'invention vise à fournir, dans au moins un mode de réalisation de l'invention, une architecture qui permet d'équilibrer la charge des générateurs électriques de l'aéronef.

L'invention vise aussi à fournir, dans au moins un mode de réalisation, une architecture permettant d'optimiser le dimensionnement des générateurs électriques de l'aéronef.

L'invention vise aussi à fournir, dans au moins un mode de réalisation de l'invention, une architecture permettant d'équilibrer la charge des générateurs électriques pendant toutes les phases de vol.

L'invention vise aussi à fournir, dans au moins un mode de réalisation de l'invention, une architecture permettant un meilleur fonctionnement du système de conditionnement d'air en cas de panne d'un équipement d'alimentation.

### 4. Exposé de l'invention

Pour ce faire, l'invention concerne une architecture de réseau d'alimentation électrique d'aéronef, comprenant au moins un moteur de compresseur de groupe de conditionnement d'air de l'aéronef et au moins deux générateurs électriques de l'aéronef, caractérisée en ce que :
- chaque moteur de compresseur comprend au moins deux bobinages indépendants,
- un premier desdits bobinages de chaque moteur de compresseur est relié, via une première ligne d'alimentation, à un des générateurs électriques et un deuxième desdits bobinages de chaque moteur de compresseur est relié, via une deuxième ligne d'alimentation, à un générateur électrique différent du générateur électrique auquel est relié le premier bobinage.

Une architecture selon l'invention permet donc de répartir les charges des générateurs en alimentant un même moteur de compresseur d'un groupe de conditionnement d'air par deux générateurs différents, via deux lignes d'alimentation différentes, et ce grâce à la présence de deux bobinages dans les moteurs de compresseur.

Une technologie de moteur de compresseur à double bobinage est notamment décrite dans la demande WO2010067021 déposée par la demanderesse.

En utilisant cette technologie de moteurs de compresseur à double bobinage dans une architecture selon l'invention, l'énergie électrique nécessaire à la rotation du moteur est fournie par au moins deux générateurs électriques différents, qui fournissent donc chacun la moitié de l'énergie électrique nécessaire. La charge de chaque générateur est donc équilibrée entre les deux générateurs. En outre, les générateurs peuvent être dimensionnés pour délivrer une puissance électrique plus faible car ils ne sont plus susceptibles de devoir fournir l'intégralité de la puissance électrique consommée par le moteur de compresseur.

De plus, la configuration double bobinage permet au moteur de compresseur de fonctionner, en mode dégradé, si un seul de ces bobinages est alimenté. Ainsi, dans l'architecture de l'invention, la panne d'un équipement d'une ligne d'alimentation n'entraîne pas l'arrêt total du moteur de compresseur dont un bobinage reste toujours alimenté par l'autre générateur électrique.

En outre, en cas de panne d'un équipement d'une ligne d'alimentation, chaque moteur de compresseur, dont au moins un bobinage est alors alimenté, peut toujours fonctionner, en mode dégradé si un seul bobinage est alimenté.

Avantageusement, une architecture selon l'invention comprend au moins deux moteurs de compresseurs.

Une telle architecture correspond notamment à la situation présentée précédemment dans laquelle deux groupes de conditionnement d'air sont présents dans l'aéronef et fonctionnent à des altitudes différentes. Dans ce cas, grâce à l'architecture de l'invention, deux générateurs peuvent alimenter préalablement un premier moteur de compresseur à une altitude inférieure à l'altitude de transition, puis le premier moteur de compresseur et un deuxième moteur de compresseur à une altitude supérieure à l'altitude de transition.

Selon une autre variante de l'invention, l'architecture comprend quatre moteurs de compresseurs. Le nombre de moteurs de compresseurs dépend généralement de la taille de l'aéronef, par exemple deux moteurs de compresseurs (intégrés dans un groupe ou pack de conditionnement d'air, dit pack ECS pour *Environment Control System* en anglais) pour un avion d'affaire et quatre moteurs de compresseurs (intégrés dans deux packs ECS, avec deux moteurs de compresseur par pack ECS) pour un avion commercial monocouloir.

Avantageusement, une architecture selon l'invention comprend autant de générateurs électriques que de moteurs de compresseurs.

Selon cet aspect de l'invention, chaque moteur de compresseur est alimenté par deux générateurs électriques et chaque générateur électrique est adapté pour alimenter deux moteurs de compresseurs (simultanément ou alternativement selon les phases de vols et l'altitude). L'architecture est dite « croisée », en comparaison avec l'art antérieur ou chaque générateur électrique était relié à un seul moteur de compresseur et chaque moteur de compresseur était relié à un seul générateur électrique.

Avantageusement et selon l'invention, chaque ligne d'alimentation comprend un bus alternatif, adapté pour transporter un courant électrique alternatif produit par le générateur électrique auquel la ligne d'alimentation est reliée, un redresseur, adapté pour convertir le courant électrique alternatif en courant électrique continu, un bus continu, adapté pour transporter ledit courant électrique continu, et un onduleur, adapté pour convertir le courant électrique continu en courant d'alimentation alternatif du bobinage auquel la ligne d'alimentation est reliée.

Les bus alternatifs et les bus continus sont des composants généralement déjà présents dans les aéronefs pour alimenter d'autres équipements.

Avantageusement et selon l'invention, lorsque l'architecture comprend au moins deux moteurs de compresseurs, au moins une des lignes d'alimentation de chaque moteur de compresseur partage le bus alternatif avec une des lignes d'alimentation d'un autre moteur de compresseur.

Avantageusement et selon l'invention, au moins une des lignes d'alimentation de chaque moteur de compresseur partage le bus continu avec une des lignes d'alimentation d'un autre moteur de compresseur.

Avantageusement et selon l'invention, au moins une des lignes d'alimentation de chaque moteur de compresseur partage le redresseur avec une des lignes d'alimentation d'un autre moteur de compresseur.

L'invention concerne également un aéronef comportant au moins une architecture selon l'invention.

L'invention concerne également une architecture et un aéronef caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- La figure 1 est une vue schématique d'une architecture de réseau d'alimentation selon l'art antérieur,
- la figure 2 est une vue schématique d'une architecture de réseau d'alimentation selon un premier mode de réalisation de l'invention,
- la figure 3 est une vue schématique d'une architecture de réseau d'alimentation selon un deuxième mode de réalisation de l'invention,
- la figure 4 est une vue schématique d'une architecture de réseau d'alimentation selon un troisième mode de réalisation de l'invention,
- les figures 5a, 5b, 5c, 5d sont des vues schématiques d'une architecture de réseau d'alimentation selon différents modes de réalisation de l'invention dans lesquels l'architecture comprend quatre moteurs de compresseurs.

### 6. Description détaillée d'un mode de réalisation de l'invention

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations. Sur les figures, les échelles et les proportions ne sont pas strictement respectées et ce, à des fins d'illustration et de clarté.

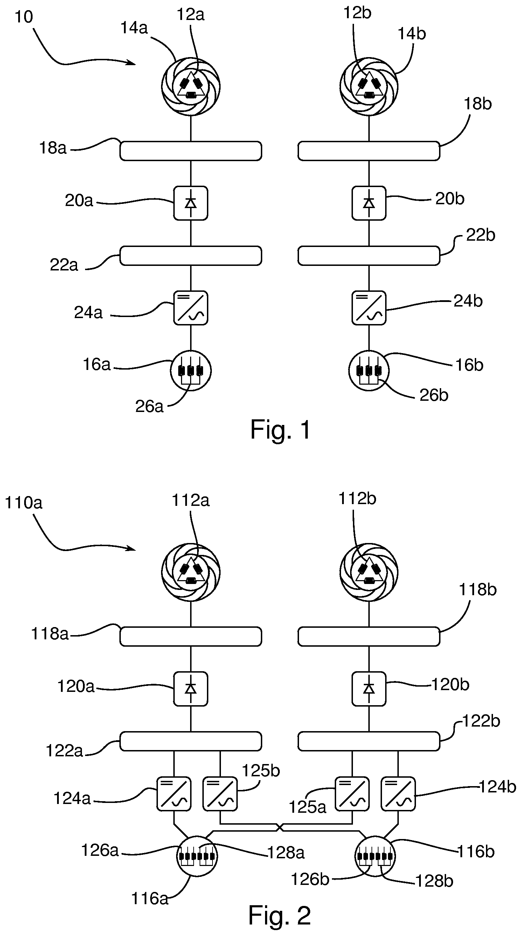

La figure 1 représente schématiquement une architecture 10 d'alimentation selon l'art antérieur.

L'architecture comprend un premier générateur électrique 12a permettant de générer de l'énergie électrique à partir d'énergie mécanique produite par exemple par un premier moteur 14a de propulsion de l'aéronef, et un deuxième générateur électrique 12b permettant de générer de l'énergie électrique à partir d'énergie mécanique produite par exemple par un deuxième moteur 14b de propulsion de l'aéronef. Selon d'autres modes de réalisation, les générateurs électriques peuvent générer de l'énergie électrique à partir d'autres sources d'énergie mécanique, par exemple un groupe auxiliaire de puissance (ou APU pour *Auxiliary Power Unit* en anglais) ou un groupe de parc (ou GPU pour *Ground Power Unit* en anglais).

Le premier générateur électrique 12a alimente un premier moteur 16a de compresseur d'un premier groupe de conditionnement d'air via un premier circuit d'alimentation. Le premier circuit d'alimentation comprend, successivement du premier générateur 12a vers le premier moteur 16a de compresseur :
- un premier bus 18a alternatif adapté pour transporter le courant alternatif généré par le premier générateur 12a électrique.
- un premier redresseur 20a, adapté pour convertir le courant alternatif transporté par le bus 18a alternatif en courant continu,
- un premier bus 22a continu, adapté pour transporter le courant continu converti par le premier redresseur 20a,
- un premier onduleur 24a, adapté pour convertir le courant électrique continu transporté par le premier bus continu en courant d'alimentation alternatif pour le premier moteur de compresseur.

De même, le deuxième générateur électrique 12b alimente un deuxième moteur 16b de compresseur d'un deuxième groupe de conditionnement d'air via un deuxième circuit d'alimentation comprenant successivement un deuxième bus 18b alternatif, un deuxième redresseur 20b, un deuxième bus 22b continu et un deuxième onduleur 24b.

Le premier moteur 16a de compresseur et le deuxième moteur 16b de compresseur sont des moteurs dits à simple bobinage, comprenant chacun un unique bobinage 26a, 26b, l'unique bobinage de chaque moteur de compresseur comprenant un enroulement statorique et étant alimenté par le circuit d'alimentation respectif décrit ci-dessus. Comme décrit précédemment, chaque moteur de compresseur est alimenté par un seul générateur électrique. Ainsi, si un seul des moteurs de compresseur est en marche, toute l'énergie électrique consommée est prélevée d'un seul générateur électrique, pendant que l'autre générateur électrique est peu sollicité.

Les figures 2, 3 et 4 représentent schématiquement une architecture de réseau d'alimentation selon respectivement un premier, deuxième et troisième mode de réalisation de l'invention.

Les architectures selon ces modes de réalisation comprennent chacun un premier moteur 116a de compresseur et un deuxième moteur 116b de compresseur qui sont des moteurs dits à double bobinage. Le premier moteur 116a de compresseur comprend un premier bobinage 126a et un deuxième bobinage 128a. De même, le deuxième moteur 116b de compresseur comprend un premier bobinage 126b et un deuxième bobinage 128b.

L'utilisation de moteurs à double bobinage permet d'alimenter chaque moteur de compresseur par deux générateurs différents, via deux lignes d'alimentation. Chaque bobinage comprend par exemple trois enroulements statoriques permettant la mise en rotation du moteur de compresseur. Chaque bobinage est alimenté par un onduleur.

En particulier, un premier bobinage 126a du premier moteur 116a de compresseur est relié au premier générateur 112a par une première ligne d'alimentation composée d'un bus alternatif, d'un redresseur, d'un bus continu et d'un premier onduleur 124a. Un deuxième bobinage 128a du premier moteur 116a de compresseur est relié au deuxième générateur 112b par une deuxième ligne d'alimentation composée d'un bus alternatif, d'un redresseur, d'un bus continu et d'un deuxième onduleur 125a.

De même, un premier bobinage 126b du deuxième moteur 116b de compresseur est relié au deuxième générateur 112b par une première ligne d'alimentation composée d'un bus alternatif, d'un redresseur, d'un bus continu et d'un premier onduleur 124b. Un deuxième bobinage 128b du deuxième moteur 116b de compresseur est relié au premier générateur 112a par une deuxième ligne d'alimentation composée d'un bus alternatif, d'un redresseur, d'un bus continu et d'un deuxième onduleur 125b.

Les différents modes de réalisation de l'invention représentés par les figures 2, 3 et 4 consistent en différentes possibilités de composition des différentes lignes d'alimentation alimentant chacun des moteurs de compresseurs. En particulier, chaque ligne d'alimentation d'un moteur de compresseur peut comprendre des composants en commun avec les lignes d'alimentation d'autres moteurs de compresseurs.

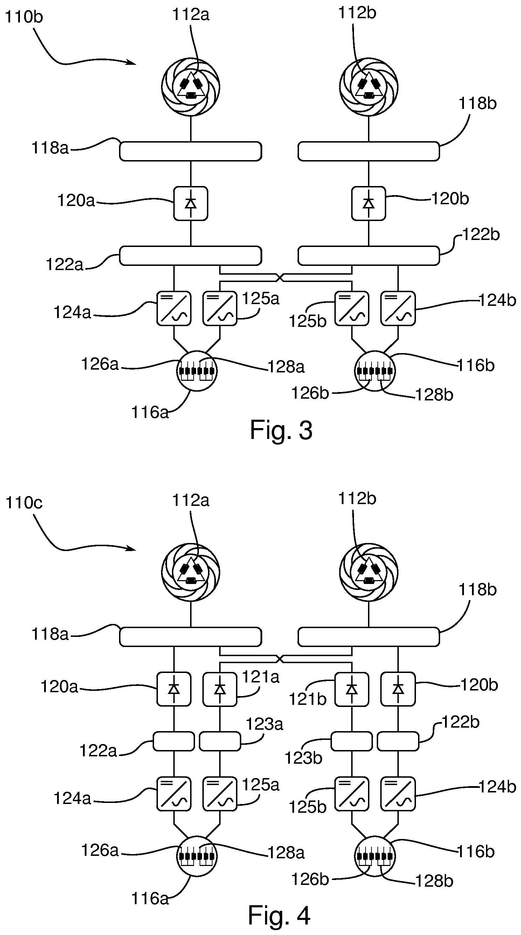

Dans les modes de réalisation représentés aux figures 2 et 3 :
- la première ligne d'alimentation du premier moteur 116a de compresseur comprend un premier bus 118a alternatif, un premier redresseur 120a, un premier bus continu 122a et un premier onduleur 124a ;
- la deuxième ligne d'alimentation du premier moteur 116a de compresseur comprend un deuxième bus 118b alternatif, un deuxième redresseur 120b, un deuxième bus continu 122b et un deuxième onduleur 125a ;
- la première ligne d'alimentation du deuxième moteur 116b de compresseur comprend le deuxième bus 118b alternatif, le deuxième redresseur 120b, le deuxième bus continu 122b et un premier onduleur 124b ;
- la deuxième ligne d'alimentation du deuxième moteur 116b de compresseur comprend le premier bus 118a alternatif, le premier redresseur 120a, le premier bus continu 122a et un deuxième onduleur 125b ;

Autrement dit, deux lignes d'alimentation de moteurs différents comprennent des composants communs. Par exemple, la première ligne d'alimentation du premier moteur 116a de compresseur et la deuxième ligne d'alimentation du deuxième moteur 116b de compresseur partagent le premier bus 118a alternatif, le premier redresseur 120a et le premier bus continu 122a.

La différence entre les modes de réalisation des figures 2 et 3 est une différence structurelle liée à la configuration des lignes d'alimentation dans l'aéronef. En pratique, dans un aéronef tel qu'un avion, le premier générateur 112a électrique, le premier bus 118a alternatif, le premier redresseur 120a, le premier bus 122a continu, deux onduleurs et le premier moteur 126a de compresseur sont disposés d'un côté de l'avion (par exemple en partie dans une des ailes de l'avion, celle portant le moteur propulsif auquel est relié le premier générateur 112a électrique, et/ou dans le ventre mou de l'avion du côté de ladite aile), et le deuxième générateur 112b électrique, le deuxième bus 118b alternatif, le deuxième redresseur 120b, le deuxième bus 122b continu, deux onduleurs et le deuxième moteur 126b de compresseur sont disposés de l'autre côté de l'avion (par exemple en partie dans l'autre aile de l'avion, celle portant le moteur propulsif auquel est relié le deuxième générateur 112b électrique, et/ou dans le ventre mou de l'avion du côté de ladite aile). Ainsi, dans l'invention, deux onduleurs sont situés du côté de chaque moteur de compresseur. Dans les modes de réalisation des figures 2 et 3, l'alimentation des bobinages des moteurs de compresseur se fait par un « croisement » au niveau des onduleurs :
- dans le premier mode de réalisation, représenté à la figure 2, les sorties des onduleurs sont croisées : le deuxième onduleur 125b est situé du côté du premier moteur 116a de compresseur mais alimente le deuxième bobinage 128b du deuxième moteur 116b de compresseur ; le deuxième onduleur 125a est situé du côté du deuxième moteur 116b de compresseur mais alimente le deuxième bobinage 128a du premier moteur 116a de compresseur.
- dans le deuxième mode de réalisation, représenté à la figure 3, les entrées des onduleurs sont croisées : chaque moteur de compresseur est alimenté par deux onduleurs situés du même côté de l'avion ; le croisement est ainsi effectué entre les bus continu et les onduleurs.

Dans le troisième mode de réalisation, représenté à la figure 4, seuls les bus alternatifs sont mis en commun entre plusieurs lignes d'alimentations. En particulier, la deuxième ligne d'alimentation du premier moteur 116a de compresseur comprend le deuxième bus 118b alternatif, un premier redresseur 121a indépendant, un premier bus 123a continu indépendant, et le deuxième onduleur 125a relié au deuxième bobinage 128a du premier moteur 116a de compresseur ; la deuxième ligne d'alimentation du deuxième moteur 116b de compresseur comprend le premier bus 118a alternatif, un deuxième redresseur 121b indépendant, un deuxième bus 123b continu indépendant, et le deuxième onduleur 125b relié au deuxième bobinage 128b du deuxième moteur 116b de compresseur.

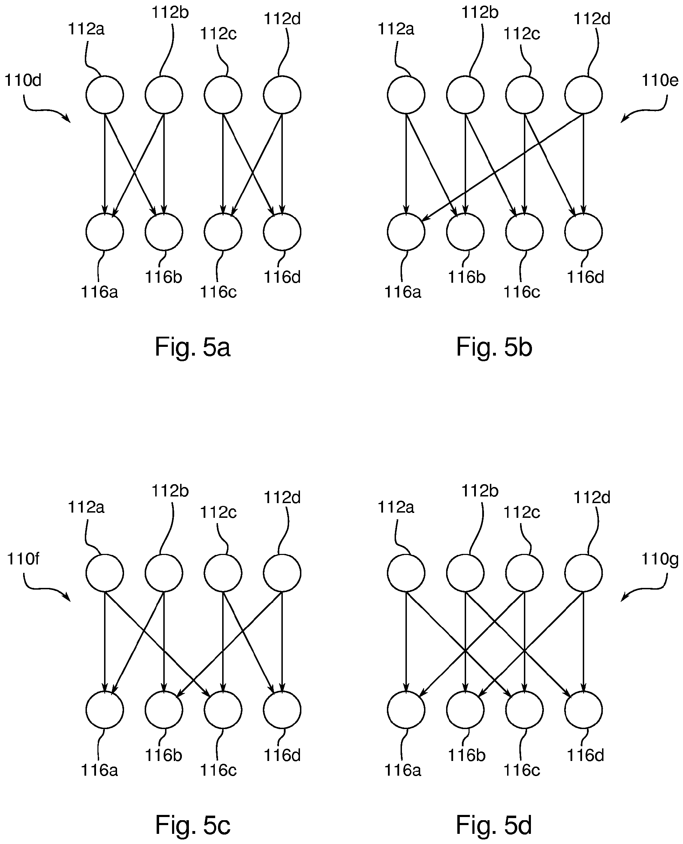

Les figures 5a, 5b, 5c et 5d représentent schématiquement des architectures de réseau selon différents modes de réalisation de l'invention, comprenant quatre moteurs de compresseurs, respectivement un premier moteur 116a de compresseur, un deuxième moteur 116b de compresseur, un troisième moteur 116c de compresseur et un quatrième moteur 116d de compresseur, et quatre générateurs électriques, respectivement un premier générateur 112a électrique, un deuxième générateur 112b électrique, un troisième générateur 112c électrique et un quatrième générateur 112d électrique.

Les lignes d'alimentations sont représentées schématiquement par des flèches reliant les générateurs aux moteurs de compresseurs sans détail des composants qui les composent. Différentes lignes d'alimentations peuvent comprendre des composants communs, comme décrit précédemment.

Dans le mode de réalisation représenté sur la figure 5a :
- le premier moteur 116a de compresseur a ses deux bobinages respectivement alimentés par le premier générateur 112a électrique et le deuxième générateur 112b électrique,
- le deuxième moteur 116b de compresseur a ses deux bobinages respectivement alimentés par le premier générateur 112a électrique et le deuxième générateur 112b électrique,
- le troisième moteur 116c de compresseur a ses deux bobinages respectivement alimentés par le troisième générateur 112c électrique et le quatrième générateur 112d électrique,
- le quatrième moteur 116d de compresseur a ses deux bobinages respectivement alimentés par le troisième générateur 112c électrique et le quatrième générateur 112d électrique.

Cette configuration correspond à l'utilisation en parallèle de deux configurations à deux moteurs de compresseurs et deux générateurs électriques tels que décrites précédemment en référence aux figures 2, 3 et 4.

Dans le mode de réalisation représenté sur la figure 5b :
- le premier moteur 116a de compresseur a ses deux bobinages respectivement alimentés par le premier générateur 112a électrique et le quatrième générateur 112d électrique,
- le deuxième moteur 116b de compresseur a ses deux bobinages respectivement alimentés par le premier générateur 112a électrique et le deuxième générateur 112b électrique,
- le troisième moteur 116c de compresseur a ses deux bobinages respectivement alimentés par le deuxième générateur 112b électrique et le troisième générateur 112c électrique,
- le quatrième moteur 116d de compresseur a ses deux bobinages respectivement alimentés par le troisième générateur 112c électrique et le quatrième générateur 112d électrique.

Dans le mode de réalisation représenté sur la figure 5c :
- le premier moteur 116a de compresseur a ses deux bobinages respectivement alimentés par le premier générateur 112a électrique et le deuxième générateur 112b électrique,
- le deuxième moteur 116b de compresseur a ses deux bobinages respectivement alimentés par le deuxième générateur 112b électrique et le quatrième générateur 112d électrique,
- le troisième moteur 116c de compresseur a ses deux bobinages respectivement alimentés par le premier générateur 112a électrique et le troisième générateur 112c électrique,
- le quatrième moteur 116d de compresseur a ses deux bobinages respectivement alimentés par le troisième générateur 112c électrique et le quatrième générateur 112d électrique.

Dans le mode de réalisation représenté sur la figure 5d :
- le premier moteur 116a de compresseur a ses deux bobinages respectivement alimentés par le premier générateur 112a électrique et le troisième générateur 112c électrique,
- le deuxième moteur 116b de compresseur a ses deux bobinages respectivement alimentés par le deuxième générateur 112b électrique et le quatrième générateur 112d électrique,
- le troisième moteur 116c de compresseur a ses deux bobinages respectivement alimentés par le premier générateur 112a électrique et le troisième générateur 112c électrique,
- le quatrième moteur 116d de compresseur a ses deux bobinages respectivement alimentés par le deuxième générateur 112b électrique et le quatrième générateur 112d électrique.

L'invention ne se limite pas aux seuls modes de réalisation décrits. En particulier, les liaisons entre les quatre moteurs de compresseur et les quatre générateurs électriques peuvent présenter toutes les combinaisons possibles du moment que chaque moteur de compresseur a ses deux bobinages alimentés par deux générateurs électriques distincts. En outre, de préférence, chaque générateur alimente deux moteurs de compresseur.

## Revendications

1. Architecture de réseau d'alimentation électrique d'aéronef, comprenant au moins un moteur (116a, 116b, 116c, 116d) de compresseur d'un groupe de conditionnement d'air de l'aéronef et au moins deux générateurs (112a, 112b, 112c, 112d) électriques de l'aéronef, **caractérisée en ce que** :
- chaque moteur (116a, 116b, 116c, 116d) de compresseur comprend au moins deux bobinages (126a, 128a, 126b, 128b) indépendants,
- un premier desdits bobinages (126a, 126b) de chaque moteur (116a, 116b, 116c, 116d) de compresseur est relié, via une première ligne d'alimentation, à un des générateurs (112a, 112b, 112c, 112d) électriques et un deuxième desdits bobinages (128a, 128b) de chaque moteur (116a, 116b, 116c, 116d) de compresseur est relié, via une deuxième ligne d'alimentation, à un générateur (112a, 112b, 112c, 112d) électrique différent du générateur électrique auquel est relié le premier bobinage (126a, 126b).

2. Architecture selon la revendication 1, **caractérisée en ce qu'**elle comprend au moins deux moteurs (116a, 116b, 116c, 116d) de compresseurs.

3. Architecture selon l'une des revendications 1 ou 2, **caractérisée en ce qu'**elle comprend autant de générateurs (112a, 112b, 112c, 112d) électriques que de moteurs (116a, 116b, 116c, 116d) de compresseurs.

4. Architecture selon l'une des revendication 1 à 3, **caractérisée en ce que** chaque ligne d'alimentation comprend un bus (118a, 118b) alternatif, adapté pour transporter un courant électrique alternatif produit par le générateur (112a, 112b, 112c, 112d) électrique auquel la ligne d'alimentation est reliée, un redresseur (120a, 120b), adapté pour convertir le courant électrique alternatif en courant électrique continu, un bus (122a, 122b) continu, adapté pour transporter ledit courant électrique continu, et un onduleur (124a, 125a, 124b, 125b), adapté pour convertir le courant électrique continu en courant d'alimentation alternatif du bobinage (126a, 128a, 126b, 128b) auquel la ligne d'alimentation est reliée.

5. Architecture selon une combinaison des revendications 2 et 4, **caractérisée en ce qu'**au moins une des lignes d'alimentation de chaque moteur (116a, 116b, 116c, 116d) de compresseur partage le bus (118a, 118b) alternatif avec une des lignes d'alimentation d'un autre moteur de compresseur.

6. Architecture selon la revendication 5, **caractérisée en ce qu'**au moins une des lignes d'alimentation de chaque moteur (116a, 116b, 116c, 116d) de compresseur partage le redresseur (120a, 120b) avec une des lignes d'alimentation d'un autre moteur de compresseur.

7. Architecture selon la revendication 6, **caractérisée en ce qu'**au moins une des lignes d'alimentation de chaque moteur (116a, 116b, 116c, 116d) de compresseur partage le bus (122a, 122b) continu avec une des lignes d'alimentation d'un autre moteur de compresseur.

8. Aéronef, comportant au moins une architecture (110a, 110b, 110c, 110d, 110e, 110f, 110g) selon l'une des revendications 1 à 7.

## Patentansprüche

1. Architektur eines Stromversorgungsnetzes eines Luftfahrzeugs, umfassend mindestens einen Kompressormotor (116a, 116b, 116c, 116d) eines Klimaanlagenaggregats des Luftfahrzeugs und mindestens zwei Stromgeneratoren (112a, 112b, 112c, 112d) des Luftfahrzeugs, **dadurch gekennzeichnet, dass**:
- jeder Kompressormotor (116a, 116b, 116c, 116d) mindestens zwei unabhängige Wicklungen (126a, 128a, 126b, 128b) umfasst,
- eine erste der Wicklungen (126a, 126b) jedes Kompressormotors (116a, 116b, 116c, 116d) über eine erste Versorgungsleitung mit einem der Stromgeneratoren (112a, 112b, 112c, 112d) verbunden ist und eine zweite der Wicklungen (128a, 128b) jedes Kompressormotors (116a, 116b, 116c, 116d) über eine zweite Versorgungsleitung mit einem Stromgenerator (112a, 112b, 112c, 112d) verbunden ist, der sich vom Stromgenerator unterscheidet, mit dem die erste Wicklung (126a, 126b) verbunden ist.

2. Architektur nach Anspruch 1, **dadurch gekennzeichnet, dass** sie mindestens zwei Kompressormotoren (116a, 116b, 116c, 116d) umfasst.

3. Architektur nach einem der Ansprüche 1 oder 2, **dadurch gekennzeichnet, dass** sie so viele Stromgeneratoren (112a, 112b, 112c, 112d) wie Kompressormotoren (116a, 116b, 116c, 116d) umfasst.

4. Architektur nach einem der Ansprüche 1 bis 3, **dadurch gekennzeichnet, dass** jede Versorgungsleitung einen Wechselstrombus (118a, 118b) umfasst, der zum Transportieren eines Wechselstroms angepasst ist, der vom Stromgenerator (112a, 112b, 112c, 112d) erzeugt wird, mit dem die Versorgungsleitung verbunden ist, einen Gleichrichter (120a, 120b), der zum Umwandeln des Wechselstroms in Gleichstrom angepasst ist, einen Gleichstrombus (122a, 122b), der zum Transportieren des Gleichstroms angepasst ist, und einen Wechselrichter (124a, 125a, 124b, 125b), der zum Umwandeln des Gleichstroms in Wechselstrom der Wicklung (126a, 128a, 126b, 128b) angepasst ist, mit der die Versorgungsleitung verbunden ist.

5. Architektur nach einer Kombination der Ansprüche 2 und 4, **dadurch gekennzeichnet, dass** mindestens eine der Versorgungsleitungen jedes Kompressormotors (116a, 116b, 116c, 116d) den Wechselstrombus (118a, 118b) mit einer der Versorgungsleitungen eines anderen Kompressormotors teilt.

6. Architektur nach Anspruch 5, **dadurch gekennzeichnet, dass** mindestens eine der Versorgungsleitungen jedes Kompressormotors (116a, 116b, 116c, 116d) den Gleichrichter (120a, 120b) mit einer der Versorgungsleitungen eines anderen Kompressormotors teilt.

7. Architektur nach Anspruch 6, **dadurch gekennzeichnet, dass** mindestens eine der Versorgungsleitungen jedes Kompressormotors (116a, 116b, 116c, 116d) den Gleichstrombus (122a, 122b) mit einer der Versorgungsleitungen eines anderen Kompressormotors teilt.

8. Luftfahrzeug, umfassend mindestens eine Architektur (110a, 110b, 110c, 110d, 110e, 110f, 110g) nach einem der Ansprüche 1 bis 7.

## Claims

1. Aircraft electrical power supply network architecture, comprising at least one compressor motor (116a, 116b, 116c, 116d) for an air conditioning plant of the aircraft and at least two electrical generators (112a, 112b, 112c, 112d) of the aircraft, **characterized in that**:
- each compressor motor (116a, 116b, 116c, 116d) comprises at least two independent coils (126a, 128a, 126b, 128b),
- a first of said coils (126a, 126b) of each compressor motor (116a, 116b, 116c, 116d) is connected, via a first power supply line, to one of the electrical generators (112a, 112b, 112c, 112d) and a second of said coils (128a, 128b) of each compressor motor (116a, 116b, 116c, 116d) is connected via a second power supply line to an electrical generator (112a, 112b, 112c, 112d) different from the electrical generator to which the first coil (126a, 126b) is connected.

2. Architecture according to claim 1, **characterized in that** it comprises at least two compressor motors (116a, 116b, 116c, 116d).

3. Architecture according to one of claims 1 or 2, **characterized in that** it comprises as many electrical generators (112a, 112b, 112c, 112d) as compressor motors (116a, 116b, 116c, 116d).

4. Architecture according to one of claims 1 to 3, **characterized in that** each power supply line comprises an alternating current bus (118a, 118b), adapted to transport an alternating electric current produced by the electric generator (112a, 112b, 112c, 112d) to which the power supply line is connected, a rectifier (120a, 120b), adapted to convert the alternating electric current into direct electric current, a direct current bus (122a, 122b) adapted to transport said direct electric current, and an inverter (124a, 125a, 124b, 125b) adapted to convert the direct electric current into alternating current power supply for the coil (126a, 128a, 126b, 128b) to which the power supply line is connected.

5. Architecture according to a combination of claims 2 and 4, **characterized in that** at least one of the power supply lines of each compressor motor (116a, 116b, 116c, 116d) shares the alternating current bus (118a, 118b) with one of the power supply lines of another compressor motor.

6. Architecture according to claim 5, **characterized in that** at least one of the power supply lines of each compressor motor (116a, 116b, 116c, 116d) shares the rectifier (120a, 120b) with one of the power supply lines of another compressor motor.

7. Architecture according to claim 6, **characterized in that** at least one of the power supply lines of each compressor motor (116a, 116b, 116c, 116d) shares the direct current bus (122a, 122b) with one of the power supply lines of another compressor motor.

8. Aircraft, comprising at least one architecture (110a, 110b, 110c, 110d, 110e, 110f, 110g) according to one of claims 1 to 7.
